# EUROPEAN PATENT SPECIFICATION

(11) **EP 4 150 427 B1**
(45) Date of publication and mention of the grant of the patent: **07.10.2026**
(21) Application number: 21812586.2
(22) Date of filing: 28.05.2021
(51) Int. Cl.: G05D 3/20

(54) **A LOCALIZATION SYSTEM**
LOKALISIERUNGSSYSTEM
SYSTÈME DE LOCALISATION

(30) Priority: 29.05.2020 TR 202008290
(43) Date of publication of application: 22.03.2023
(73) Proprietor: Dokuz Eylül Üniversitesi Rektörlügü, Konak/Izmir (TR)
(72) Inventor: AKKAN, Taner, Konak/Izmir (TR); GORA, Oguz, Konak/Izmir (TR)
(74) Representative: Yalçiner Patent and Consulting Ltd.
(86) International application number: PCT/TR2021/050505
(87) International publication number: WO 2021/242208

(56) References cited:
- CN-A- 103 197 690
- CN-A- 107 256 036
- CN-A- 109 828 613
- CN-U- 203 812 096

## Description

### Technical field

This invention relates to a light source localization system comprising a sensor structure for light sources from small sizes to the size of the sun.

### Prior Art

It is an important fact to determine the light intensities and to track the locations of light sources. Particularly, solar energy as an alternative energy source began to become more important today. In the energy transfer from the sun, it is important to know the sun's angular location and the orbit it follows. In the light of this information, there is a need for efficient tracking of the sun for solar energy systems. Each increase in the accuracy of tracking the sun brings an increase in efficiency in electrical energy production and in the capacity factors of power plants. The fact that existing high-quality structures, especially those using camera sensors and lenses are expensive creates a need for the invention of an alternative sensor structure in this area.

In order to localize light sources, semiconductor-based LDR type sensors whose electrical resistance changes according to the amount of light falling on it are used, Said sensors are placed side by side to form sensor structures that detect from which plane direction the light comes. Therefore, a simple information about the direction of the light source, generally in the form of east, west, north, south, can be obtained. By using this information, direction to the light source can be achieved via mechanical systems controlled by an electronic circuit. Especially in bringing the solar panels to the angle that will get the highest efficiency from the sun, these LDR or light-sensing sensor elements can often be used. Also, in other systems used today, cameras with planar, wide-angle or fish-eye lenses can be used in the determination of the localization of the light source. In these solutions, mathematical operations and transformations (transformation from spherical coordinates to planar coordinates in fish-eye lenses) are required on the images taken.

The light source localization systems used in the state of the art work by sensing the light according to the direction of the light by a few LDRs and making the control system direct towards it if necessary, as a simple approach. Due to the simple structure of the system, the localization information obtained is very limited and cannot produce a qualified solution to the localization problem. Furthermore, in said systems, financially expensive camera and lens systems are used and global positioning can be done with said lenses. However, here, particularly the semispherical structure of the lens and the deviations from the planarity in the resulting image are transformed in a way that requires computer processing power with the help of mathematical transformation methods.

In the invention described in the Chinese utility model document numbered CN203881439 (U) in the state of the art, a tracking sensor for the solar energy light condensing disk is described. The invention of the said document relates to a tracking sensor disk adapted to be able to use the solar energy. In the invention of the state of the art, a tracking sensor for a solar energy light condensing disk is described. The monitoring sensor consists of more than two emitter and Semi-light transmissive solid rod, connecting tubes and a photosensitive sensor. Conductive and semi-conductive solid rods are wrapped and connected by connecting pipes. At least one pair of two adjacent emitter and Semi-light transmissive solid rod are separated. In the outermost two emitter and Semi-light transmissive solid rod, one emitter and Semi-light transmitter solid rod is equipped with a light concentrator sunlight input on the top and the other emitter and Semi-light transmitter solid rod, and connected with photosensitive sensor. With more than two separated emitter and Semi-light transmitter solid rod, the damage of photosensitive element caused by heat conduction can be effectively avoided; the intensity of light reaching the photosensitive element can be effectively reduced by conductive and semi-conductive solid rods. There are more than two receiver and emitter tubes in a tracking sensor for the solar energy light condensing disk mentioned in the invention of the state of the art. However, there is no information in the said document that the structure of the tracking sensor in the invention is semi-spherical or fully spherical. Also, the sensor mentioned in the invention only works for a single wavelength of light.

In the invention of the Chinese utility model document numbered CN103197690 (A) of the state of the art, a light tracking sensor used for solar energy production is described. In the invention of the said document, the light tracking sensor used for solar energy generation comprises a sensor shell, a convex lens of the sensor, a photo-resistance and a circuit board. Here, the photo-resistance is fixed to the circuit board, the convex lens of the sensor is placed on a shell at the top of the sensor shell, and the lower end of the sensor shell is stably connected to the circuit board. The light tracking sensor for solar power generation has the advantages of decoupling the solar paths according to a pyramid suede structure in the surface and movement of a monocrystalline silicon photovoltaic board within the design process of the sensor and the control of the sensor. Light tracking electricity generation times are actually measured by interruptions of geometry math. Therefore, a motor does not need to chase light in real time or blindly and intermittently. In the invention of the state of the art, a sensor that performs the process of following the light using a motor is described. However, although the sensor in the invention described in the said document is similar to the sensor of the present invention in terms of motor use, it has differences in terms of other technical features.

The localization system of the present invention differs from light source localization systems currently used in terms of, for the mobile system, comprising one or more than one light sensors placed in a strip shape from point to full sphere (preferably in semi sphere or tam sphere form) and by decreasing the distance between the light sensors on the strip, allowing to increase the data resolution obtained, and the rotation for the strips to make a full circular scan being made by a motor; for both stationary and mobile systems, collecting the light intensity information to the extent of precision of the analog-digital converter that will be in the electronic system reading the data coming from sensors.

CN107256036A discloses a solar energy tracking control system. The system is used for controlling of an east-west adjusting motor and a north-south adjusting motor in a solar automatic tracking photo-thermal power generation device. The tracking control system comprises a main control unit for determining whether tracking controlling is started based on a current light intensity, a sun-view motion trajectory tracking coarse adjustment unit for calculating a spatial position of the sun based on current time and thus controlling an east-west adjusting motor and a north-south adjusting motor to be at set positions, and a fine sensor tracking adjustment unit for fine adjustment on a reflector support based on the light intensity to enable the reflector to align at the sun. The sun-view motion trajectory tracking coarse adjustment unit and the fine sensor tracking adjustment unit are connected with the main control unit.

CN109828613A discloses a distributed sensing photovoltaic panel sun tracking system. The system comprises at least three independently arranged spherical sensors, a vector fitter, at least one photovoltaic panel and a direction adjuster; the vector fitter obtains the elevation angle of the photovoltaic panel according to light incident vectors outputted by the spherical sensors and the positional relationships of the spherical sensors, and obtains the azimuth angle of the photovoltaic panel according to the elevation angle of the photovoltaic panel; and the direction adjuster controls the direction of the photovoltaic panel according to the azimuth angle and the elevation angle.

In the state of the art, technical specifications of the present invention and a description on the technical effects the present invention provides are not found. In the current applications, a localization system that comprises the technical specifications of, for the stationary system, positioning of the light sensors placed on the spherical structure (preferably with a semispherical form) which can vary from point to sphere in line with the spherical angles and by altering the lay-out angular spacing of the light sensors appropriate for scaling, allowing to increase of the data resolution obtained ; for the mobile system, comprising one or more than one light sensors placed in a strip shape from point to full sphere (preferably in semi sphere or tam sphere form) and by decreasing the distance between the light sensors on the strip, allowing to increase the data resolution obtained, and the rotation for the strips to make a full circular scan being made by a motor; for both stationary and mobile systems, collecting the light intensity information to the extent of precision of the analog-digital converter that will be in the electronic system reading the data coming from sensors, is not found.

### The Aims of the Invention

The aim of the invention is to realize a light source localization system that ensures the determination of the location of a light source on the spherical coordinates and the light intensity with a plurality of light sensors in the spherical form composed by rotating the light sensors aligned on a strip.

Another aim of the present invention is to realize a light source localization system by using a structure consisting of a plurality of sensors whose data resolution can be adjusted in a spherical form (preferably semi or full sphere) that can vary from point to sphere by changing the angular spacings in accordance with scaling.

Another aim of the present invention is to realize a light source localization system that enables the collection of light intensity information to the extent of the precision of the analog-digital converter that will be included in the electronic system reading the data coming from the sensors.

Another aim of the present invention is to realize a light source localization system that creates a structure of a plurality of sensors in spherical form (preferably semi or full sphere) that can vary from point to sphere by rotating one or more light sensors placed in the form of a strip.

Another aim of the present invention is to realize a light source localization system that provides rotation via a motor for the plurality of sensors aligned on a strip to scan a spherical area.

Another aim of the present invention is to realize a light source localization system that enables the use of light sensors that can operate at different wavelengths.

### Summary of the Invention

The invention is set out in the appended set of claims.

The body of the localization system is mobile, sensors are placed by aligning them on a flexible sensor strip. Sensors are spaced aligned between the upper end and the other end of the sensor strip. The flexible sensor strip is placed to cover the arc of the installment body. An actuator is connected to the installment body so that the sensors on the flexible sensor strip can scan at 360-degree angles in the azimuth direction of the installment body. The actuator is placed vertically downwards from the central axis of the installment body. The flexible sensor strip ensures that the beams coming from the light source are detected at precise angles by rotating the installment body at an angle of 360 degrees around its central axis. There is a magnetic component on the part of the installment body facing the connection body. Different types of sensors are placed on the connection body in a manner to align with the magnetic component. Said sensors interact with the magnetic field created by the magnetic component to control the movement of the installment body around its central axis. During the movement of the installment body, the sensors on the flexible sensor strip detect the position information of the light source. The data of the sensors are collected via electronic circuit. The data collected by the electronic circuit can be transferred to the software program through communication circuit. Through the data transferred from communication circuit to software program, the location of the light source can be determined.

In another embodiment of the present invention, one or more of the light sensors aligned in the form of semi or full spherical strip is used in a mobile structure rotated in azimuth direction. In this embodiment of the invention, the rotation is driven by a motor (in this embodiment, a step motor). The rotation angle of the said sensor strip is detected by mechanical, magnetic, optical (in this embodiment magnetic) or a similar system. Accordingly, the microcomputer structure obtains light data in the form of a semi sphere or a full sphere. Thus, thanks to the redundancy of the data to be obtained, a big increase in the resolution of the sensors is provided. By increasing the sensor resolution, the localization of the light source can be detected with high accuracy.

### Detailed Description of the Invention

The localization system realized to reach the aim of the present invention is shown in attached figures, in which;

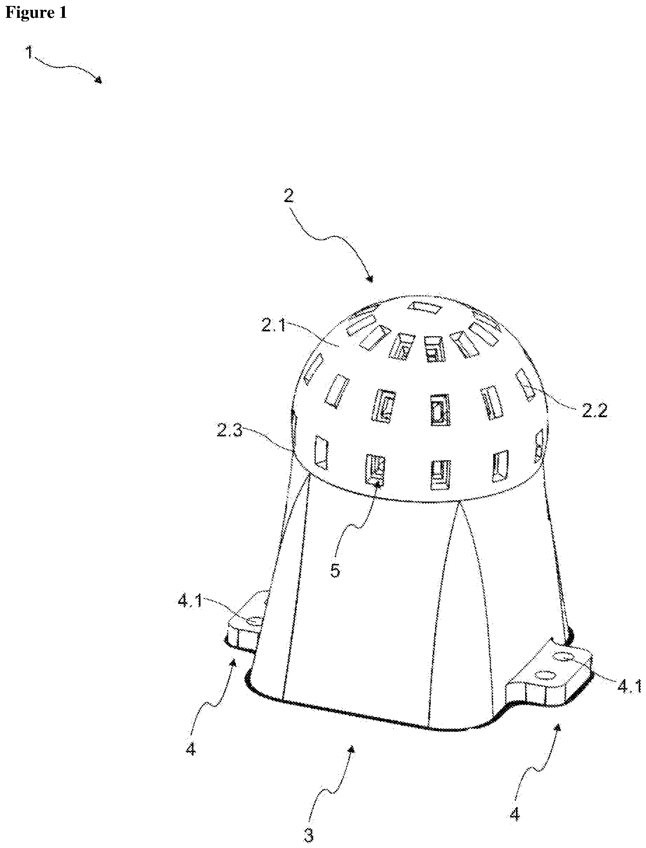

**Figure 1****.** Perspective view of the stationary embodiment of the localization system.

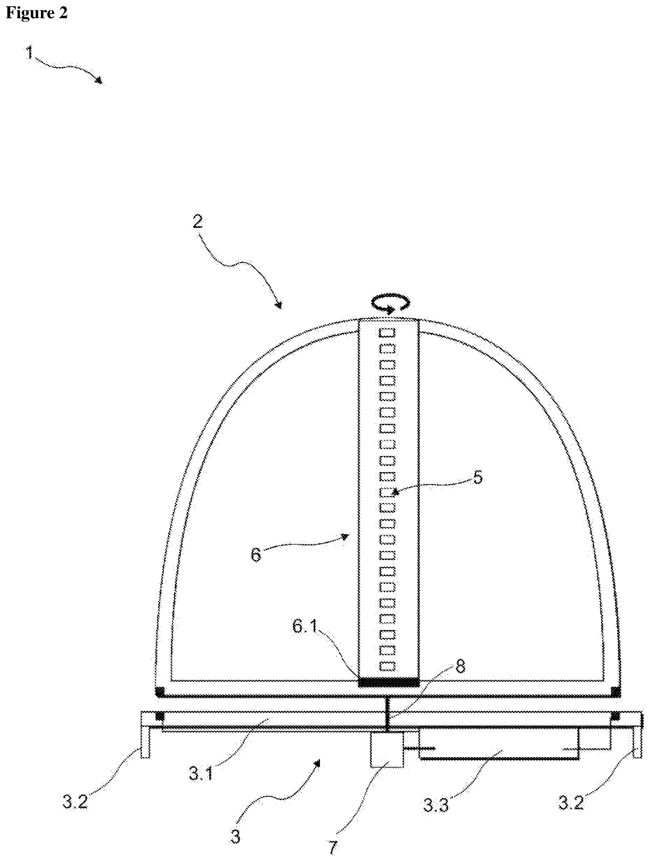

**Figure 2****.** Side view of the mobile embodiment of the localization system.

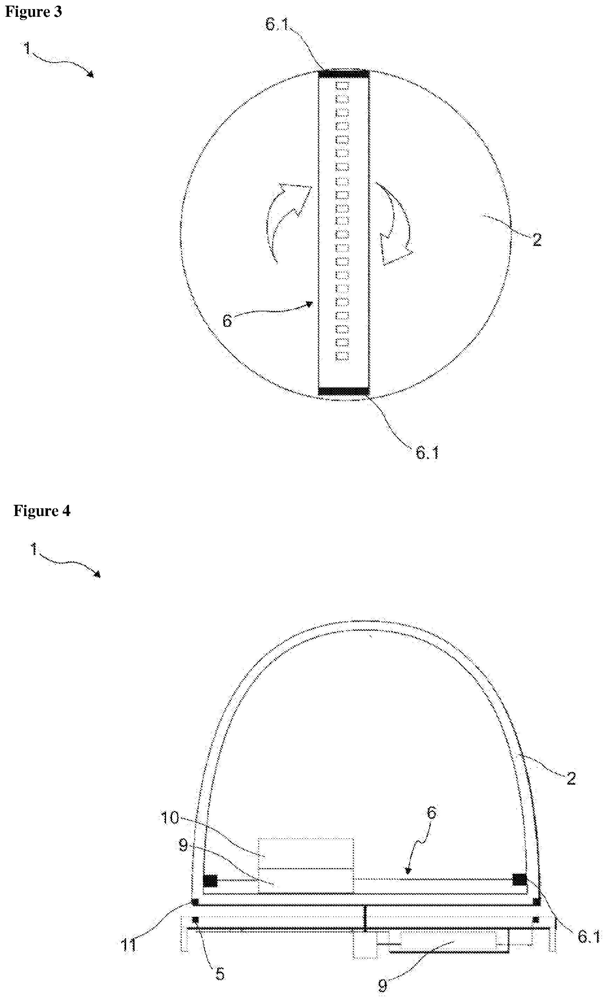

**Figure 3****.** Top view of the mobile embodiment of the localization system.
**Figure 4****.** The view of the mobile embodiment of the localization system from a different angle.

Parts in the figures are numbered separately and what they correspond to are given below.
**1.** Localization system
**2.** Installment body
   **2.1.** Installment surface
   **2.2.** Sensor gap
   **2.3.** Joint surface
**3.** Connection body
   **3.1.** Support platform
   **3.2.** Support leg
   **3.3.** Circuit chamber
**4.** Connection extension
   **4.1.** Connection hole
**5.** Sensor
**6.** Flexible sensor strip
   **6.1.** Connection end
**7.** Actuator
**8.** Movement pin
**9.** Electronic circuit
**10.** Connection circuit
**11.** Magnetic component

Light source localization system (1) of the present invention provides the light intensity values and localization information of all light sources in various sizes including the sun. The localization system (1) of the present invention is used to provide the localization of light sources and the detection of position information. Said localization system (1) can preferably be used to provide light intensity and localization information to solar tracking systems so that sunlight can be used more efficiently with solar energy systems. The localization system (1) comprises installment body (2), connection body (3), connection extension (4), sensor (5), flexible sensor strip (6), actuator (7), movement pin (8), electronic circuit (9), communication circuit (10) and magnetic component (11).

The installment body (2) is in the geometric form of a sphere or a semi sphere. The installment body (2) comprises installment surface (2.1), sensor gap (2.2) and joint surface (2.3). The installment body (2) can be in mobile position to rotate around its central axis.

The connection body (3) in one of the embodiments of the present invention is connected to preferably to the joint surface (2.3) of the installment body (2). While the connection body (3) and the installment body (2) is one piece in one embodiment of the present invention, in another embodiment of the present invention the connection body (3) and the installment body (2) are manufactured to connect at preferably in the joint surface (2.3). The connection body (3) carries and supports the installment body (2). The connection body (3) comprises the support platform (3.1), support leg (3.2) and circuit chamber (3.3).

In one embodiment of the present invention, the support platform (3.1) on the connection body (3) is connected to the part of the installment body (2) that faces the connection body (3). To the center of the support platform (3.1), actuator (7) perpendicular to the support platform (3.1) and the movement pin (8) connected to the actuator (7) are placed. At the two opposite ends of the connection body (3) is the support leg (3.2). In one embodiment of the invention, the support leg (3.2) on the connection body (3) ensures that the support platform (3.1) remains at a stable position and in a balanced way on the position it is placed.

In one embodiment of the present invention, the circuit chamber (3.3) on the connection body (3) is placed at the lower part of the support platform (3.1) on the connection body (3). The circuit chamber (3.3) composes the place the electronic circuit (9) connected to the actuator (7) is placed. The circuit chamber (3.3) is positioned preferably close to the actuator (7).

The connection extension (4) of one embodiment of the present invention is used to fix the connection body (3) to the preferred position. The connection extension (4) is preferably on the two opposite surfaces of the connection body (3). The connection extension (4) comprises one or more than one connection holes (4.1). In one embodiment of the present invention, the connection hole (4.1) on the connection extension (4) is used to fix the connection body (3) to the preferred position through connection extensions (4). To fix the connection extension (4), preferably a fixing component is used.

The sensor (5) is placed aligned on the flexible sensor strip (6). Sensor (5) sense the data obtained from the light source and collects the location data of the light source. Sensor (5) is also used for the angular control of the position of the flexible sensor strip (6) during the movement of the semi sphere. Sensors (5) used for the angular control of the location of the flexible sensor strip (6) to be made are placed on the installment body (2) facing the support platform (3.1).

Sensors (5) sense data they collect from the light source. The data collected by the sensors (5) are collected via the electronic circuit (9). The data collected through the electronic circuit (9) can be transferred to the software program using the communication circuit (10). Through the data transferred from the communication circuit (10) to the software, the location of the light source can be determined.

The sensors (5) are aligned on the flexible sensor strip (6). Sensors (5) are spaced aligned between the top end and the other end of the flexible sensor strip (6). The flexible sensor strip (6) is placed to cover the arc of the installment body (2). An actuator (7) is connected to the installment body (2) so that the sensors (5) on the flexible sensor strip (6) can scan at 360-degree angles in the azimuth direction of the installment body (2). The actuator (7) is placed vertically downwards from the central axis of the installment body (2). The flexible sensor strip (6) ensures that the beams coming from the light source are detected at precise angles, by rotating the installment body (2) by the actuator (7) around its central axis with an angle of 360 degrees. There is a magnetic component (11) on the part of the installment body (2) facing the connection body (3). Different types of sensors (magnetic in this application) (5) are placed on the connection body (3) in line with the magnetic component (11). In the application of magnetic sensing, said sensors (5) interact with the magnetic field created by the magnetic component (11) and enable the movement of the installment body (2) around the central axis to be controlled. During the movement of the installment body (2), the sensors (5) on the flexible sensor strip (6) detect the light intensity of the light source. The data of the sensors (5) are collected through the electronic circuit (9). The data collected through the electronic circuit (9) can be transferred to the software program using the communication circuit (10). Through the data transferred from the communication circuit (10) to the software, the location of the light source can be determined.

In an embodiment of the invention, the flexible sensor strip (6) is used together with the mobile installment body (2). The sensor (5) is placed on the flexible sensor strip (6). The flexible sensor strip (6) is placed in the center of the installment body (2). The flexible sensor strip (6) provides the collection of data reaching the sensors (5) from the light source. The flexible sensor strip (6) includes a connection end (6.1). The flexible sensor strip (6) is connected to the electronic circuit (9) via its connection ends. The connection end (6.1) is preferably located at both ends of the flexible sensor strip (6). In one embodiment of the present invention, the connection end (6.1) located on the flexible sensor strip (6) provides the data detected by the sensors (5) on the flexible sensor strip (6) to be transferred to the electronic circuit (9).

The actuator (7) is connected to the installment body (2) from its center. The actuator (7) enables the installment body (2) to rotate preferably around its central axis. Motor, step motor or stepper motors can be used as actuators (7). In this embodiment of the invention, the actuator (7) is used to provide a mobile installment body (2). The actuator (7) is placed on the central axis of the installment body (2), preferably in a semispherical geometric form. The actuator (7) is placed in the center of the installment surface (2.1) of the installment body (2) facing the connection body (3). The actuator (7) provides the force required for the installment body (2) to move angularly around its central axis in a controlled manner. The actuator (7) enables the installment body (2) to rotate 360 degrees around its central axis.

In an embodiment of the invention, the movement pin (8) is used to provide the connection of the installment body (2) to the movement provider (7). While the movement pin (8) is connected to the installment body (2) from one end, it is connected to the movement provider (7) from the other end.

The electronic circuit (9) of one embodiment of the present invention ensures that the data collected by the sensors (5) and coming from the flexible sensor strip (6) are collected and processed via the connection end (6.1). The electronic circuit (9) is preferably located inside the installment body (2), connected to the flexible sensor strip (6). In another embodiment of the present invention, in case the installment body (2) mobile, the actuator (7) is connected. The electronic circuit (9) is used to transfer the data detected by the sensors (5) aligned on the flexible sensor strip (6) in the case that the installment body (2) is mobile, to the communication circuit (10) to be transferred to the software program. Data collected by the sensors (5) are collected via the electronic circuit (9). The data collected through the electronic circuit (9) can be transferred to the sensor program by using the communication circuit (10). Through the data transferred from the communication circuit (10) to the software, the location of the light source can be determined.

The communication circuit (10) of one embodiment of the present invention, ensures that the data coming from the electronic circuit (9) are transmitted to the software program regardless of the electrical connection. The communication circuit (10) is preferably positioned on the installment body (2), connected to the electronic circuit (9). Data collected by the sensors (5) are collected via the electronic circuit (9). The data collected through the electronic circuit (9) can be transferred to the software program using the communication circuit (10). Through the data transferred from the communication circuit (10) to the software, the location of the light source can be determined.

The magnetic component (11) of one embodiment of the present invention is used to create a magnetic field change so that angular control can be made during the movement of the installment body (2). The magnetic component (11) is preferably placed on the joint surface (2.3) in the part of the installment body (2) that connects to the connection body (3). Different types of sensors (magnetic in this application) (5) are placed on the connection body (3) in line with the magnetic component (11). In the application of magnetic sensing, said sensors (5) interact with the magnetic field created by the magnetic component (11) and enable the movement of the installment body (2) around the central axis to be controlled. The magnetic field created by the magnetic component (11) is sensed by the sensors (5) located in the connection body (3). In the case that the installment body (2) rotates around its central axis, the sensors (5) detect the angular position data as it passes through the magnetic field created by the magnetic component (11) and the position of the installment body (2) can be determined with the said data.

In a preferred embodiment of the present invention, sensors (5) are aligned on the flexible sensor strip (6). Sensors (5) are spaced aligned between the top end and the other end of the flexible sensor strip (6). The flexible sensor strip (6) is placed to cover the arc of the installment body (2). An actuator (7) is connected to the installment body (2) so that the sensors (5) on the flexible sensor strip (6) can scan at 360-degree angles in the azimuth direction of the installment body (2). The actuator (7) is placed vertically downwards from the central axis of the installment body (2). The flexible sensor strip (6) ensures that the beams coming from the light source are detected at precise angles, by rotating the installment body (2) by the actuator (7) around its central axis with an angle of 360 degrees. There is a magnetic component (11) on the part of the installment body (2) facing the connection body (3). Different types of sensors (5) are placed on the connection body (3) aligned to the magnetic component (11). Said sensors (5) interact with the magnetic field created by the magnetic component (11) so the control of the movement of the installment body (2) around its central axis is ensured. During the movement of the installment body (2), the sensors (5) on the flexible sensor strip (6) detect the location information of the light source. The data of the sensors (5) are collected through the electronic circuit (9). The data collected through the electronic circuit (9) can be transferred to the software program using the communication circuit (10). Through the data transferred from the communication circuit (10) to the software, the location of the light source can be determined.

The subject of the invention is related to the light source localization system, which includes a sensor structure for all light sources from small size to the size of the sun, and the said sensors can also be specified as "detectors".

## Claims

1. A localization system (1) that provides sun light tracking system comprises at least one installment body (2) in the geometric form of a sphere or a semi sphere, at least one sensor (5) sensing the data obtained from a light source,
at least one electronic circuit (9) ensuring that the data collected by the sensors (5) are collected and processed, **characterized by**
- the installment body (2) in mobile position to rotate around its own central axis,
- the sensor (5) that is placed on a flexible sensor strip (6) in installment body (2) and at least one another sensor (5) is also used for the angular control of location of the flexible sensor strip (6) during the rotation of installment body (2),
- at least one flexible sensor strip (6) placed in the center of the installment body (2) and on which the sensor (5) is placed, and comprises at least one connection end (6.1) and enables the collection of the data reaching from the light source to the sensors (5),
- at least one actuator (7) which is connected to the installment body (2) from the center and provides the force needed for the installment body (2) to move around its central axis angularly and in a controlled way,
- the electronic circuit (9) ensures the data collected by the sensors (5) coming from the flexible sensor strip (6) are collected and processed through the connection end (6.1) and that these are moved to a communication circuit (10) to be transferred to a software program,
- at least one communication circuit (10) that ensures that the data coming from the electronic circuit (9) is transferred to the software program
- at least one magnetic component (11) used to create a magnetic field change for the angular control to be performed during the movement of the installment body (2).

2. The localization system (1) according to Claim 1, **characterized by** the support platform (3.1) connected to the part of the installment body (2) facing the connection body (3) and on which an actuator (7) perpendicular to support platform (3.1) and a movement pin (8) connected to actuator (7) is placed in the case that the installment body (2) is mobile.

3. The localization system (1) according to Claim 1, **characterized by** the circuit chamber (3.3) located in the lower part of the support platform (3.1) on the connection body (3), forming the part where the electronic circuit (9) connected to the actuator (7) is placed and which is positioned close to the actuator (7).

4. The localization system (1) according to Claim 1, **characterized by** the sensor (5) aligned on the flexible sensor strip (6) and spaced between the top end and the other end of the flexible sensor strip (6) in the case the installment body (2) is mobile.

5. The localization system (1) according to Claim 1, **characterized by** the flexible sensor strip (6) placed to cover the arc of the installment body (2).

6. The localization system (1) according to Claim 1, **characterized by** the flexible sensor strip (6) in which an actuator (7) is connected to the installment body (2) for the sensors (5) thereon to be able to scan with 360-degree angles in azimuth direction of the installment body (2).

7. The localization system (1) according to Claim 1, **characterized by** the actuator (7) placed perpendicular downwards from the central axis of the installment body (2).

8. The localization system (1) according to Claim 1, **characterized by** the actuator (7) that provides the beams coming from the light source to be detected in precise angles by the flexible sensor strip (6) by ensuring the 360-degree angle rotation of the installment body (2) around its central axis.

9. The localization system (1) according to Claim 1, **characterized by** the sensor (5) providing the control of the movement of the installment body (2) around its central axis by interacting with the magnetic field created by the magnetic component (11).

10. The localization system (1) according to Claim 1, **characterized by** the installment body (2) ensuring that the sensors (5) on the flexible sensor strip (6) detect the location information of the light source during its movement.

11. The localization system (1) according to Claim 1, **characterized by** the electronic circuit (9) connected to the actuator (7) in the case the installment body (2) is mobile and ensuring the data coming from the flexible sensor strip (6) collected by the sensors (5) are collected and processed via a connection end (6.1).

12. The localization system (1) according to Claim 1, **characterized by** the electronic circuit (9) that provides the transfer of the data detected by the sensors (5) aligned on the flexible sensor strip (6) to the communication circuit (10) to be transferred to the software program.

13. The localization system (1) according to Claim 1, **characterized by** the magnetic component (11) in which its magnetic field created is sensed by the sensors (5) on the connection body (3).

## Patentansprüche

1. Ein Lokalisierungssystem (1), das ein Sonnenlichtverfolgungssystem bereitstellt, umfasst mindestens einen Einbaukörper (2) in der geometrischen Form einer Kugel oder einer Halbkugel, wobei mindestens ein Sensor (5) die von einer Lichtquelle erhaltenen Daten erfasst,
mindestens eine elektronische Schaltung (9), die sicherstellt, dass die von den Sensoren (5) gesammelten Daten gesammelt und verarbeitet werden, **dadurch gekennzeichnet, dass**
- den Einbaukörper (2) in beweglicher Position um seine eigene Mittelachse drehbar ist,
- der Sensor (5), der auf einem flexiblen Sensorstreifen (6) im Einbaukörper (2) angeordnet ist, und mindestens ein weiterer Sensor (5) auch für die Winkelsteuerung der Lage des flexiblen Sensorstreifens (6) während der Drehung des Einbaukörpers (2) verwendet wird,
- mindestens ein in der Mitte des Einbaukörpers (2) angeordneter flexibler Sensorstreifen (6), auf dem der Sensor (5) angeordnet ist und der mindestens ein Verbindungsende (6.1) aufweist und die Erfassung der von der Lichtquelle zu den Sensoren (5) reichenden Daten ermöglicht,
- mindestens einen Aktuator (7), der von der Mitte her mit dem Einbaukörper (2) verbunden ist und die für eine winkelmäßige und kontrollierte Bewegung des Einbaukörpers (2) um seine Mittelachse erforderliche Kraft bereitstellt,
- die elektronische Schaltung (9) sicherstellt, dass die von den Sensoren (5) gesammelten Daten, die von dem flexiblen Sensorstreifen (6) stammen, über das Verbindungsende (6.1) gesammelt und verarbeitet werden und dass diese zu einer Kommunikationsschaltung (10) bewegt werden, um an ein Softwareprogramm übertragen zu werden,
- mindestens eine Kommunikationsschaltung (10), die sicherstellt, dass die von der elektronischen Schaltung (9) kommenden Daten an das Softwareprogramm
- mindestens ein magnetisches Bauteil (11) zur Erzeugung einer Magnetfeldänderung für die während der Bewegung des Einbaukörpers (2) durchzuführende Winkelsteuerung.

2. Das Lokalisierungssystem (1) nach Anspruch 1, **dadurch gekennzeichnet, dass** die mit dem Verbindungskörper (3) zugewandten Teil des Einbaukörpers (2) verbundene Trägerplattform (3.1), auf der für den Fall, dass der Einbaukörper (2) beweglich ist, ein Aktuator (7) senkrecht zur Trägerplattform (3.1) und ein mit dem Aktuator (7) verbundener Bewegungsstift (8) angeordnet ist.

3. Das Lokalisierungssystem (1) nach Anspruch 1, **dadurch gekennzeichnet, dass** sich die Schaltungskammer (3.3) im unteren Teil der Trägerplattform (3.1) auf dem Verbindungskörper (3) befindet und den Teil bildet, in dem die mit dem Aktuator (7) verbundene elektronische Schaltung (9) angeordnet ist und der in der Nähe des Aktuators (7) positioniert ist.

4. Das Lokalisierungssystem (1) nach Anspruch 1, **dadurch gekennzeichnet, dass** der Sensor (5) auf den flexiblen Sensorstreifen (6) ausgerichtet und zwischen dem oberen Ende und dem anderen Ende des flexiblen Sensorstreifens (6) beabstandet ist, falls der Einbaukörper (2) beweglich ist.

5. Das Lokalisierungssystem (1) nach Anspruch 1, **dadurch gekennzeichnet, dass** der flexible Sensorstreifen (6) angeordnet ist, um den Bogen des Einbaukörpers (2) abzudecken.

6. Das Lokalisierungssystem (1) nach Anspruch 1, **dadurch gekennzeichnet, dass** den flexiblen Sensorstreifen (6), bei dem ein Aktuator (7) mit dem Einbaukörper (2) verbunden ist, damit die Sensoren (5) darauf mit 360-Grad-Winkeln in Azimutrichtung des Einbaukörpers (2) abtasten können.

7. Das Lokalisierungssystem (1) nach Anspruch 1, **dadurch gekennzeichnet, dass** der Aktuator (7) senkrecht von der Mittelachse des Einbaukörpers (2) nach unten angeordnet ist.

8. Das Lokalisierungssystem (1) nach Anspruch 1, **dadurch gekennzeichnet, dass** der Aktuator (7), der dafür sorgt, dass die von der Lichtquelle kommenden Strahlen in präzisen Winkeln durch den flexiblen Sensorstreifen (6) erfasst werden, indem die 360-Grad-Winkeldrehung des Einbaukörpers (2) um seine Mittelachse sichergestellt wird.

9. Das Lokalisierungssystem (1) nach Anspruch 1, **dadurch gekennzeichnet, dass** der Sensor (5) die Steuerung der Bewegung des Einbaukörpers (2) um seine Mittelachse durch Wechselwirkung mit dem von dem magnetischen Bauteil (11) erzeugten Magnetfeld bereitstellt.

10. Das Lokalisierungssystem (1) nach Anspruch 1, **dadurch gekennzeichnet, dass** der Einbaukörper (2) sicherstellt, dass die Sensoren (5) auf dem flexiblen Sensorstreifen (6) die Ortsinformation der Lichtquelle während ihrer Bewegung erfassen.

11. Das Lokalisierungssystem (1) nach Anspruch 1, **dadurch gekennzeichnet, dass** die elektronische Schaltung (9) für den Fall, dass der Einbaukörper (2) beweglich ist, mit dem Aktuator (7) verbunden ist und sicherstellt, dass die von dem flexiblen Sensorstreifen (6) stammenden Daten, die von den Sensoren (5) gesammelt werden, über ein Verbindungsende (6.1) gesammelt und verarbeitet werden.

12. Das Lokalisierungssystem (1) nach Anspruch 1, **dadurch gekennzeichnet, dass** die elektronische Schaltung (9), die die Übertragung der von den auf dem flexiblen Sensorstreifen (6) ausgerichteten Sensoren (5) erfassten Daten an die Kommunikationsschaltung (10) zur Übertragung an das Softwareprogramm bereitstellt.

13. Das Lokalisierungssystem (1) nach Anspruch 1, **dadurch gekennzeichnet, dass** die magnetischen Bauteile (11), in der ihr erzeugtes Magnetfeld von den Sensoren (5) am Verbindungskörper (3) erfasst wird.

## Revendications

1. Système de localisation (1) qui fournit un système de suivi de la lumière solaire, comprenant au moins un corps d'installation (2) ayant la forme géométrique d'une sphère ou d'une demi-sphère, au moins un capteur (5) détectant les données provenant d'une source lumineuse, au moins un circuit électronique (9) assurant que les données recueillies par les capteurs (5) sont collectées et traitées, **caractérisé en ce que**
- le corps d'installation (2) en position mobile pour pivoter autour de son propre axe central,
- le capteur (5) qui est placé sur une bande de capteurs flexible (6) dans le corps d'installation (2) et au moins un autre capteur (5) est également utilisé pour le contrôle angulaire de la position de la bande de capteurs flexible (6) pendant la rotation du corps d'installation (2),
- au moins une bande de capteurs flexible (6) placée au centre du corps d'installation (2), sur laquelle est placé le capteur (5), comportant au moins une extrémité de connexion (6.1) et permettant la collecte des données provenant de la source lumineuse aux capteurs (5),
- au moins un actionneur (7) qui est relié au corps d'installation (2) à partir de son centre et qui fournit la force nécessaire pour que le corps d'installation (2) puisse se déplacer de manière angulaire et contrôlée autour de son axe central,
- le circuit électronique (9) assure que les données recueillies par les capteurs (5) provenant de la bande de capteurs flexible (6) sont collectées et traitées via l'extrémité de connexion (6.1) et qu'elles sont transmises à un circuit de communication (10) afin d'être transférées vers un programme logiciel,
- au moins un circuit de communication (10) qui assure que les données provenant du circuit électronique (9) sont transmises au programme logiciel,
- au moins un composant magnétique (11) servant à générer une variation du champ magnétique afin d'assurer le contrôle angulaire devant être effectué pendant le déplacement du corps d'installation (2).

2. Système de localisation (1) selon la revendication 1, **caractérisé en ce que** la plate-forme de support (3.1) reliée à la partie du corps d'installation (2) tournée vers le corps de connexion (3) et sur laquelle sont placés un actionneur (7) perpendiculaire à la plate-forme de support (3.1) et une goupille de déplacement (8) reliée à l'actionneur (7), dans le cas où le corps d'installation (2) est mobile.

3. Système de localisation (1) selon la revendication 1, **caractérisé en ce que** la chambre de circuit (3.3) située dans la partie inférieure de la plate-forme de support (3.1) sur le corps de connexion (3), constituant la partie dans laquelle est placé le circuit électronique (9) relié à l'actionneur (7) et positionnée à proximité de l'actionneur (7).

4. Système de localisation (1) selon la revendication 1, **caractérisé en ce que** le capteur (5) est aligné sur la bande de capteurs flexible (6) et espacé entre l'extrémité supérieure et l'autre extrémité de la bande de capteurs flexible (6), dans le cas où le corps d'installation (2) est mobile.

5. Système de localisation (1) selon la revendication 1, **caractérisé en ce que** la bande de capteurs flexible (6) placée de manière à recouvrir l'arc du corps d'installation (2).

6. Système de localisation (1) selon la revendication 1, **caractérisé en ce que** la bande de capteurs flexible (6) dans laquelle un actionneur (7) est relié au corps d'installation (2) afin que les capteurs (5) sur celle-ci puissent effectuer un balayage à 360 degrés dans la direction azimutale du corps d'installation (2).

7. Système de localisation (1) selon la revendication 1, **caractérisé en ce que** l'actionneur (7) placé perpendiculairement vers le bas par rapport à l'axe central du corps d'installation (2).

8. Système de localisation (1) selon la revendication 1, **caractérisé en ce que** l'actionneur (7) qui assure que les faisceaux provenant de la source lumineuse soient détectés selon des angles précis par la bande de capteurs flexible (6) en permettant une rotation de 360 degrés du corps d'installation (2) autour de son axe central.

9. Système de localisation (1) selon la revendication 1, **caractérisé en ce que** le capteur (5) assurant le contrôle du déplacement du corps d'installation (2) autour de son axe central en interagissant avec le champ magnétique généré par le composant magnétique (11).

10. Système de localisation (1) selon la revendication 1, **caractérisé en ce que** le corps d'installation (2) assurant que les capteurs (5) sur la bande de capteurs flexible (6) détectent les informations de localisation de la source lumineuse pendant son déplacement.

11. Système de localisation (1) selon la revendication 1, **caractérisé en ce que** le circuit électronique (9) relié à l'actionneur (7) dans le cas où le corps d'installation (2) est mobile, et assurant que les données provenant de la bande de capteurs flexible (6) recueillies par les capteurs (5) soient collectées et traitées via une extrémité de connexion (6.1).

12. Système de localisation (1) selon la revendication 1, **caractérisé en ce que** le circuit électronique (9) qui fournit le transfert des données détectées par les capteurs (5) alignés sur la bande de capteurs flexible (6) vers le circuit de communication (10) afin d'être transmises au programme logiciel.

13. Système de localisation (1) selon la revendication 1, **caractérisé en ce que** le composant magnétique (11) dans lequel le champ magnétique généré est capté par les capteurs (5) sur le corps de connexion (3).
